Europäisches Patentamt

European Patent Office

Office européen des brevets

(11) Publication number: **0 101 168**
**B1**

# (12) EUROPEAN PATENT SPECIFICATION

(45) Date of publication of patent specification: **07.10.87**

(21) Application number: **83303710.4**

(22) Date of filing: **28.06.83**

(51) Int. Cl.⁴: **A 01 N 43/78,** A 01 N 47/36 //
(A01N43/78, 43:56, 43:40,
43:20),(A01N47/36, 43:78)

(54) Herbicidal mixtures.

(30) Priority: **13.07.82 GB 8220299**
**13.07.82 GB 8220300**
**13.07.82 GB 8220301**
**13.07.82 GB 8220303**
**22.02.83 GB 8304828**

(43) Date of publication of application:
**22.02.84 Bulletin 84/08**

(45) Publication of the grant of the patent:
**07.10.87 Bulletin 87/41**

(84) Designated Contracting States:
**AT BE CH DE FR GB IT LI LU NL SE**

(56) References cited:
**EP-A-0 004 414**
**FR-A-2 269 528**
**FR-A-2 368 476**
**FR-A-2 440 158**
**US-A-4 110 104**

**THE PESTICIDE MANUAL, 6th edition 1979,
The British Crop Protection Council, page 28
CROYDON, GB**

(73) Proprietor: **SCHERING AGROCHEMICALS
LIMITED
Hauxton Cambridge CB2 5HU (GB)**

(72) Inventor: **Mayes, Anthony Joseph
61 High Street
Little Shelford Cambridge (GB)**
Inventor: **Rea, Bryan Leslie
61 Dovecote Lane
Beeston Nottingham (GB)**

(74) Representative: **Waldman, Ralph David et al
Schering Agrochemicals Limited Industrial
Property Department Chesterford Park Research
Station
Saffron Walden Essex CB10 1XL (GB)**

Courier Press, Leamington Spa, England.

**Description**

This invention relates to herbicidal compositions and to a method of selectively controlling weeds in crops.

The present invention provides a herbicidal composition comprising:

a) benazolin and

b) metazachlor

Benazolin is the common name for the herbicide having the chemical name 4-chloro-2-oxobenzothiazolin-3-ylacetic acid. In this specification this name is used to include benazolin as the free acid or one of its salts, e.g. potassium salt or ester, e.g. ethyl ester derivatives, acceptable in herbicidal applications. Generally the benazolin is present as the ethyl ester. It has been found that unexpected advantages may be obtained by using component (a) in conjunction with component (b).

The invention also provides a method of controlling weeds which comprises applying to the weeds or their locus, components (a) and (b), either together or in sequence.

The invention is generally applicable in controlling weeds in a variety of growing crops, such as peanuts, soybeans, cotton and oilseed rape.

Metazachlor is the common name for 2-chloro-*N*-(pyrazol-1-ylmethyl)acet-2',6'-xylidide.

The weight ratio of component (a) to component (b) can vary over a wide range. Suitable ratio ranges of (a) to (b) are 2:1—1:10, preferably 1:1—1:5. Suitable rates of application of (b) are 250—2000, preferably 500—1500 g/hectare.

A wide variety of weeds may be controlled by the mixtures of the invention. Examples include mayweeds (*Matricaria* spp.), red dead-nettle (*Lamium purpureum*), chickweed (*Stellaria media*), knotgrass (*Polygonum aviculare*), speedwells (*Veronica* spp.), cleavers (*Gallium aparine*), pigweeds (*Amaranthus* spp.), fat-hen (*Chenopodium album*), black nightshade (*Solanum nigrum*), wild oats (*Avena fatua*), cocklebur (*Xanthium* spp), jimsonweed (*Datura stramonium*), morning glory (*Ipomoea* spp.), sicklepod (*Cassia obtusifolia*) and prickly sida (*Sida spinosa*).

If desired the compositions may include other suitable herbicides e.g. to broaden the spectrum.

The mixture of active herbicides can be applied by conventional manner for herbicides and usually by, a spray treatment.

In addition to tank mixing immediately prior to use the compositions containing (a) and (b) may be formulated into more concentrated primary compositions which are usually diluted with water just before use. Such compositions usually comprise one or more surface active agents. Examples of such compositions are as follows.

It can be a dispersible solution which comprises the active ingredients dissolved in a water-miscible solvent with the addition of a dispersing agent. Alternatively it can comprise the ingredients in the form of a finely ground powder in association with a dispersing agent and intimately mixed with water to give a paste or cream which can if desired be added to an emulsion of oil in water to give a dispersion of active ingredients in an aqueous oil emulsion.

An emulsifiable concentrate comprises the active ingredient dissolved in a water-immiscible solvent which is formed into an emulsion with water in the presence of an emulsifying agent.

A granular solid comprises the active ingredients associated with powder diluents such as kaolin, which mixture is granulated by known methods. Alternatively it comprises the active ingredients adsorbed or adsorbed on a pre-granular diluent, for example Fuller's earth, attapulgite or limestone grit.

A dispersible or wettable powder usually comprises the active ingredients in admixture with a suitable surfactant and an inert powder diluent such as china clay.

Another suitable concentrate is a flowable suspension concentrate which is formed by grinding the active ingredients with water, a wetting agent and a suspending agent.

In some circumstances it may be desirable to combine two types of formulation e.g. one of the components is present in an emulsifiable concentrate and the second component is dispersed as a powder in this concentrate.

The above herbicidal formulations are to be regarded as part of the invention. The total concentration of the active components in a composition for direct application to the crop by conventional ground methods is preferably within the range of 0.02 to 1 per cent by weight, of the composition, but more concentrated compositions containing, for example up to 20 per cent may be desirable.

In a primary composition the total amount of active compound can vary widely, for example, from 5 to 95 per cent by weight.

The invention is illustrated in the following example.

Example

Aqueous suspensions of benazolin ethyl ether (BE), metazachlor (MR) and mixtures of the two were sprayed at various concentrations and ratios on various weeds in pots in a glasshouse. After a given time control of the weeds was assessed. Synergism was exhibited as follows.

2

# 0 101 168

a) Red dead-nettle (*Lamium purpureum*).
Assessment—6 days after spraying

| Treatment | Rate g/ha | % control Observed | Expected |
|-----------|-----------|----------|----------|
| BE | 150 | 8 | |
| | 300 | 17 | |
| MR | 625 | 18 | |
| BE+MR | 150+625 | 58 | 26 |
| | 300+625 | 70 | 35 |

b) Mayweed (*Matricaria spp*).
Assessment—9 days after spraying

| Treatment | Rate g/ha | % control Observed | Expected |
|-----------|-----------|----------|----------|
| BE | 150 | 0 | |
| | 300 | 3 | |
| MR | 1250 | 13 | |
| BE+MR | 150+1250 | 40 | 13 |
| | 300+1250 | 58 | 16 |

## Claims

1. A herbicidal composition comprising:
a) benazolin and
b) metazachlor.
2. A composition according to claim 1 in which the benazolin is in the form of its ethyl ester.
3. A method of controlling weeds which comprises applying to the weeds of their locus,
a) benazolin and
b) metazachlor.
4. A method according to claim 3 in which the benazolin is in the form of its ethyl ester.

## Patentansprüche

1. Herbizide Mischung enthaltend
a) Benazolin und
b) Metazachlor.
2. Mischung nach Anspruch 1, dadurch gekennzeichnet, daß das Benazolin als Ethylester enthalten ist.
3. Verwendung von a) Benazolin und b) Metazachlor zur Bekämpfung von unerwünschtem Pflanzenwuchs durch Anwendung auf den Pflanzen oder den Boden.
4. Verwendung nach Anspruch 3, dadurch gekennzeichnet, daß das Benazolin als Ethylester verwendet wird.

## Revendications

1. Composition herbicide comprenant:
a) la bénazoline, et
b) le métazachlor.
2. Composition selon la revendication 1, dans laquelle la bénazoline est sous forme de son ester éthylique.
3. Procédé pour maîtriser des herbes, qui comprend l'application aux herbes ou à leurs biotopes ou lieux de séjour, de
a) la bénazoline, et
b) le métazachlor.
4. Procédé selon la revendication 3, dans lequel la bénazoline est sous forme de son ester éthylique.

3